# EUROPEAN PATENT APPLICATION

(11) **EP 2 647 895 A1**
(43) Date of publication of application: **09.10.2013**
(21) Application number: 11845686.2
(22) Date of filing: 28.09.2011
(51) Int. Cl.: F16K 47/04, F16K 39/04, F16K 39/06

(54) **THROTTLE VALVE**

(30) Priority: 03.12.2010 CN 201010573737
(71) Applicant: Qinzhou Aurasource Technology Inc., Qinzhou, Guangxi 535000 (CN)
(72) Inventor: ZHANG, Chuanzhong, Qinzhou Guangxi 535000 (CN)
(74) Representative: Morabito, Sara
(86) International application number: PCT/CN2011/080286
(87) International publication number: WO 2012/071939

(57) **Abstract**

Disclosed in the invention is a throttle valve, which comprises two sealing elements whose contact surfaces keep in sealing and matching state, the two sealing elements can move relative to the valve. An inlet (111, 211, 311) and an outlet (121, 221, 321) of the valve are provided on the two sealing elements (11, 21, 31, 12, 22, 32), respectively. A semi-conical adjusting chamber (112, 212, 312, 122, 222, 322) is provided on each of the contact surfaces of the two sealing elements. The sharp ends of the adjusting chambers face to each other and communicate with the inlet and the outlet, respectively. When the contact surfaces of the two semi-conical adjusting chambers overlap at least partly, the two adjusting chambers constitute a passage communicating the inlet with the outlet. The throttle valve can realize greatly proportionally and accurately adjusting, is pressure resistant and wearable, and is suitable for use in slurry delivery pipelines and liquid or other fluid delivery pipelines.

## Description

### Technical Field

The present invention relates to a throttle valve, and particularly to a slidable or rotatable throttle valve that can be largely adjusted and used for slurry pipelines.

### Background Art

In current existing slurry pipelines, obstruction is commonly found due to wear of slurry particles on the sealing elements of the throttle valve and deposit of particles. In current existing slurry pipelines, wear by the slurry particles and obstruction due to particles deposit is commonly found on the sealing elements of the throttle valve. It seriously affects life and adjustment range of the throttle valve. Especially when the opening area of the throttle valve is small, the pressure difference between the slurry in front of and behind the valve is large, the slurry moves very fast in an ejection state so that an adjustment part of the throttle valve tends to wear out rapidly.

### Summary of the Invention

The present invention relates to a throttle valve that can be largely and accurately adjusted and can withstand high pressure and wear.

Details of the present invention are as follows. The throttle valve comprises two sealing elements that carry out relative movement and whose contact surfaces keep in sealing and matching state. An inlet and an outlet of the valve are provided on the two sealing elements, respectively. A semi-conical adjusting chamber is provided on each of the contact surfaces of the sealing elements. The sharp ends of said adjusting chambers face to each other and are in communication with the inlet and the outlet, respectivetly. When the contact surfaces of the two semi-conical adjusting chambers overlap at least partly, the two adjusting chambers constitute a passage communicating the inlet with the outlet. By adjusting the relative positions of the two sealing elements, i.e., the two semi-conical adjusting chambers, the flow rate of this passage can be adjusted. When the contact surfaces of the two semi-conical adjusting chambers do not overlap, the throttle valve is closed.

The above mentioned relative movement of the two sealing elements includes a relative slide movement, such as opening and closing movements of reciprocating slide valves, or a relative rotary movement, such as opening and closing movements of rotary slide valves or plug valves.

The above mentioned semi-conical adjusting chamber refers to a gradual thinning passage that has a side surface covered by the sealing and matching surfaces of the two sealing elements. It is not strictly semi-conical in geometry. The above mentioned side surface refers to a contact surface of a semi-conical adjusting chamber. The above mentioned sealing and matching can be either flat or curved. In accordance with practical demands, the semi-conical adjusting chamber changes its shape linearly from its thick end to its thin end. The semi-conical adjusting chamber can also change its shape exponentially from its thick end to its thin end. For the throttle valve which is largely adjusted, exponential change is preferred.

A key part for the flow control of the throttle valve is a round-like or oval-like passage surrounded by two semi-conical adjusting chambers. The passage area of this part is the narrowest in the entire passage of the throttle valve. The passage is surrounded by different parts of the two semi-conical adjusting chambers under different flow control status. As a result, the wear of slurry particles on the adjusting chamber is dispersed. Moreover, the parts of the adjusting chambers are made of a wear-resistant material having high hardness and low tensile strength, such as ceramic. This is the basic reason why the throttle valve is wear resistant.

Regardless of gradual thinning style of the semi-conical adjusting chambers, as a key part for the flow control of the throttle valve, the narrowest cross section of the flow control passage is always round-like or oval-like. No slit is formed so that no slurry particle will be blocked. Even in very slow flow conditions, the valve is still smoothly operational. Therefore, this throttle valve can be designed to have a wide adjustment range, such as 1000: 1.

Based on the above technical characteristics, this throttle valve is particularly suitable for slurry pipelines, as well as pipelines for liquids or other fluids.

### Description of the Drawings

Figure 1 is a perspective schematic view of the throttle valve with reciprocating slide valve structure according to the present invention.
Figure 2 is a perspective cross-sectional view of the throttle valve with reciprocating slide valve structure, in which a front portion is split along a middle line and is removed, and the throttle valve is half-opened.
Figure 3 is a perspective cross-sectional view of the throttle valve with reciprocating slide valve structure, in which the throttle valve is full-opened.
Figure 4 is a perspective cross-sectional view of the throttle valve with reciprocating slide valve structure, in which the throttle valve is full-closed.
Figure 5 is a perspective schematic view of the throttle valve with rotary valve structure according to the present invention.
Figure 6 is a perspective cross-sectional view of the throttle valve with rotary valve structure, in which the valve body is split along a curve A-B-C-D in Figure 1 and the outer part of its upper portion is removed, and the throttle valve is half-opened.
Figure 7 is a perspective cross-sectional view of the throttle valve with rotary valve structure, in which the valve body is split along a curve A-B-C-D in Figure 1 and its outer part is removed, and the throttle valve is half-opened.
Figure 8 is a perspective cross-sectional view of the throttle valve with rotary valve structure, in which the throttle valve is full-opened.
Figure 9 is a perspective cross-sectional view of the throttle valve with rotary valve structure, in which the throttle valve is full-closed.
Figure 10 is a perspective schematic view of the throttle valve with plug valve structure.
Figure 11 is a perspective cross-sectional view of the throttle valve with plug valve structure, in which the valve is split and its upper front part is removed.
Figure 12 is a perspective cross-sectional view of the throttle valve with plug valve structure, in which the valve is split and its upper part is removed.
Figure 13 is a perspective cross-sectional view of the throttle valve with plug valve structure, in which front part of the valve is split and removed, and the throttle valve is half-opened.
Figure 14 is a perspective cross-sectional view of the throttle valve with plug valve structure, in which the throttle valve is full-opened.
Figure 15 is a perspective cross-sectional view of the throttle valve with plug valve structure, in which the throttle valve is full-closed.

### Preferable Mode of Carrying out the Invention

The present invention is further explained with reference to the following embodiments.

### Example 1

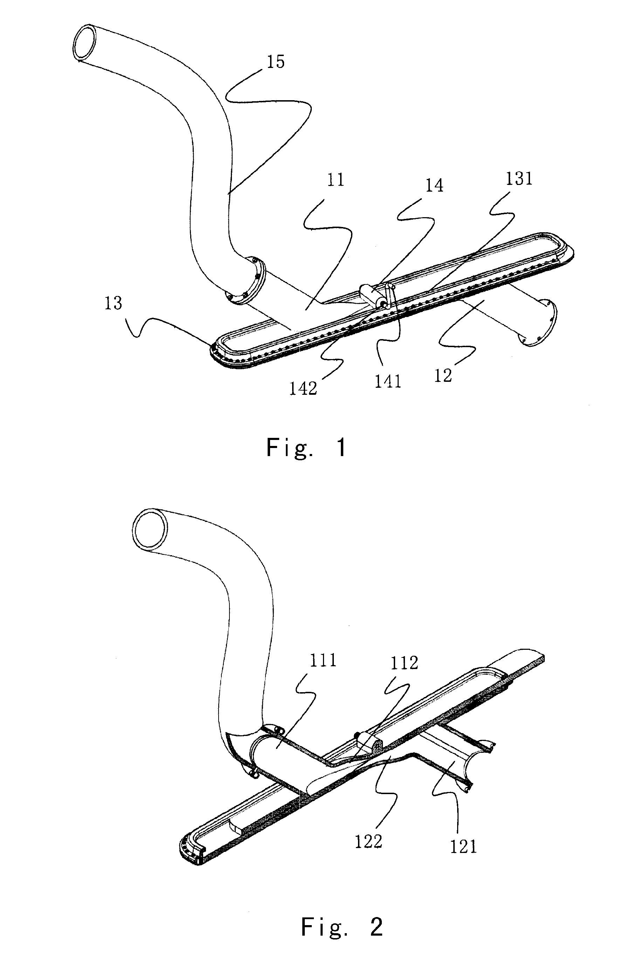

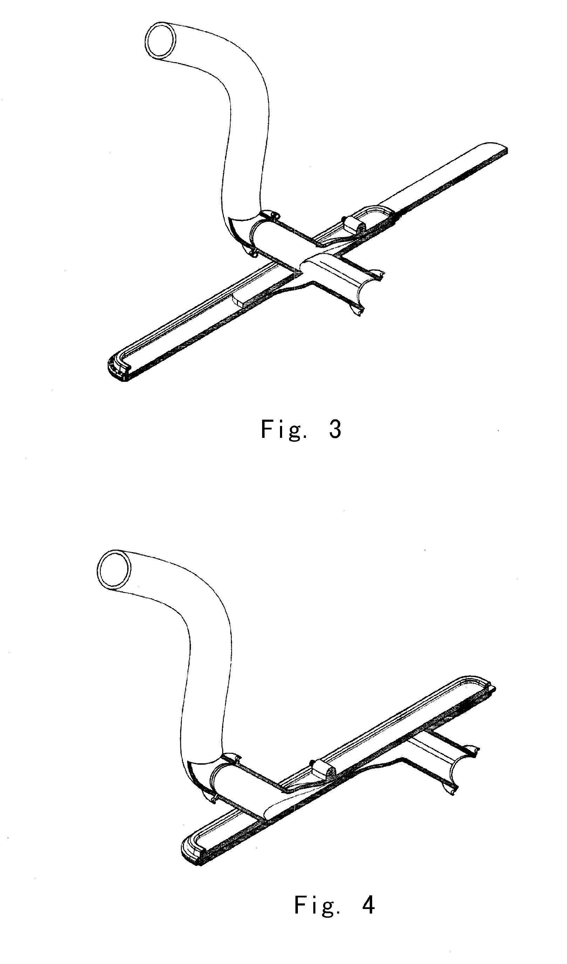

A throttle valve with reciprocating slide valve structure can be seen in Figures 1-4.

The throttle valve comprises an upper valve body 11, a lower valve body 12, a connecting groove 13 and a drive device 14. An inlet 111 and an inlet adjusting chamber 112 are provided on the upper valve body 11. An outlet 121 and an outlet adjusting chamber 122 are provided on the lower valve body 12. A sealed sliding connection is formed by the connecting groove 13 between the upper valve body 11 and the lower valve body 12, in which fixed connection is formed between the lower valve body 12 and the connecting groove 13 while sliding connection is formed between the upper valve body 11 and the connecting groove 13. Sharp ends of the inlet adjusting chamber 112 and the outlet adjusting chamber 122 face to each other. They change their shapes exponentially from their thick ends to their thin ends. The drive device 14 comprises a rack 131 disposed on the connecting groove 13, and a crank 141 and a gear 142 disposed on the upper valve body 11. The supply line 15 connected to the inlet 111 of the upper valve body 11 is a hose 15.

Figure 2, Figure 3 and Figure 4 show the relative positions of the inlet adjusting chamber and the outlet adjusting chamber when the throttle valve of the present embodiment is half-opened, full-opened and full-closed.

### Example 2

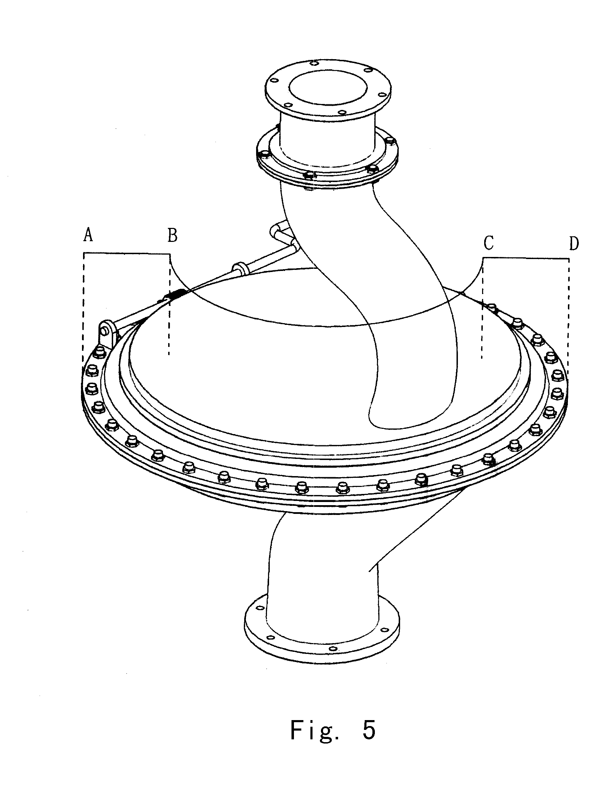

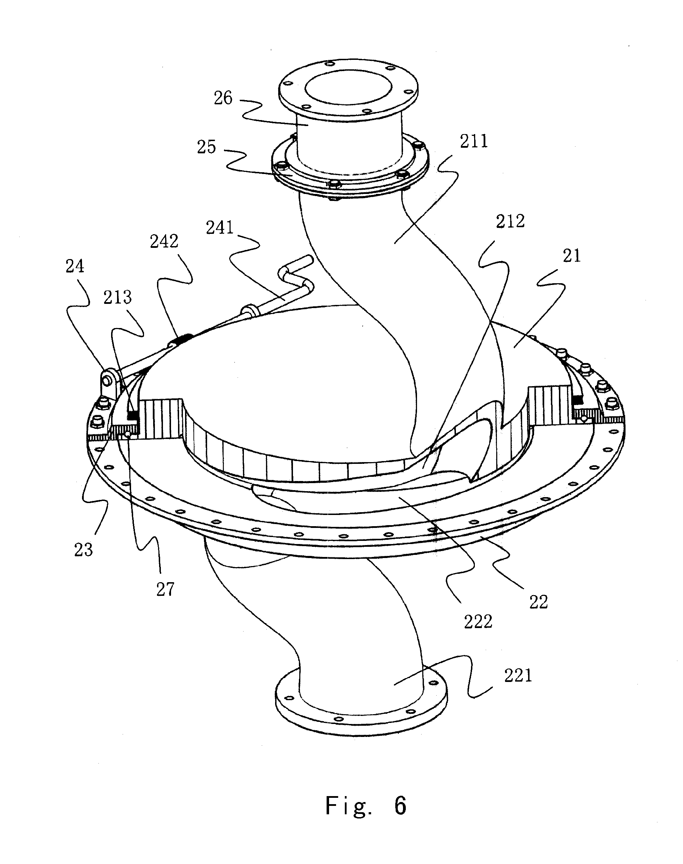

A throttle valve with rotary valve structure can be seen in Figures 5-9.

The throttle valve comprises an upper valve body 21, a lower valve body 22, a connecting ring 23 and a drive device 24. An inlet 211 and a semi-conical inlet adjusting chamber 212 curved as an arcuate shape are provided on the upper valve body 21. An outlet 221 and a semi-conical outlet adjusting chamber 222 curved as an arcuate shape are provided on the lower valve body 22. A sealed rotary connection is formed by the connecting ring 23 between the upper valve body 21 and the lower valve body 22, in which fixed connection is formed between the lower valve body 22 and the connecting ring 23 while rotary connection is formed between the upper valve body 21 and the connecting ring 23. Sharp ends of the inlet adjusting chamber 212 and the outlet adjusting chamber 222 face to each other. They change their shapes exponentially from their thick ends to their thin ends. The drive device 24 comprises a rack 241 and a worm gear 242 disposed on the connecting ring 23, and a worm gear ring 213 disposed on the upper valve body 21. If the pipes connected to the ends of the throttle valve are rigid tubes, a section of delivery tube 26 can be added. This delievery tube 26 is connected to the inlet 211 of the upper valve body 21 by means of a rotating sealed connector 25.

In order to reduce the friction between the upper valve body and the connecting ring, a ball 27 and corresponding annular ball track are disposed between the upper valve body and the connecting ring.

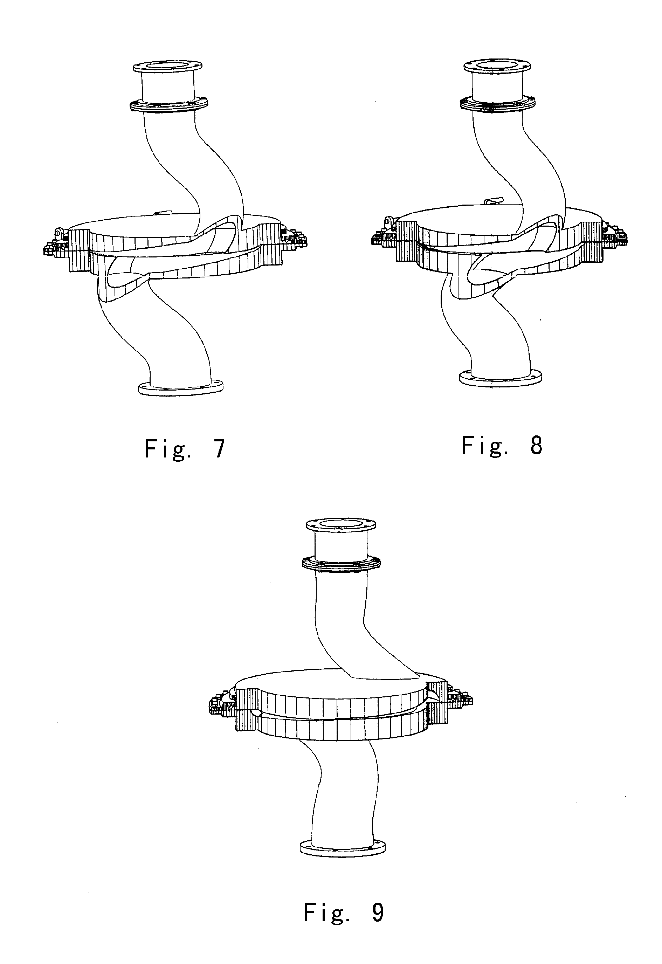

Figure 7, Figure 8 and Figure 9 show the relative positions of the inlet adjusting chamber and the outlet adjusting chamber when the throttle valve of the present embodiment is half-opened, full-opened and full-closed.

### Example 3

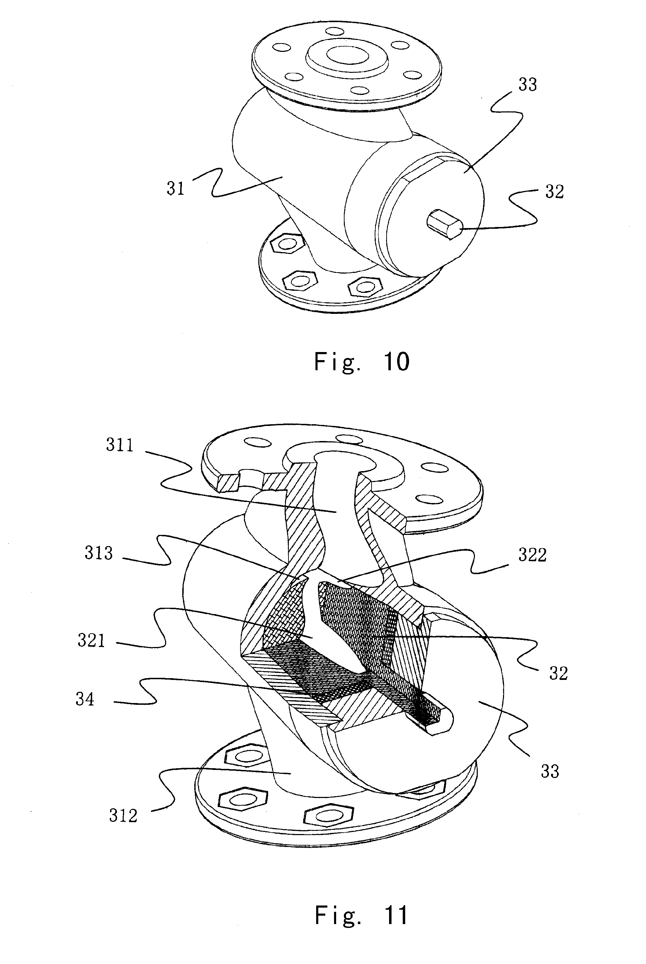

A throttle valve with plug valve structure can be seen in Figures 10-15.

The throttle valve comprises a valve body 31, a plug 32, a valve cover 33 and a sealing package 34. An inlet 311, a valve chamber and an outlet 312 are disposed on the valve body. A communication hole 321 is disposed on the plug. All these four parts are assembled in the same way as regular plug valves. The difference lies in that a semi-conical inlet adjusting chamber 313 which is in communication with the inlet port of the valve body and a semi-conical outlet adjusting chamber 322 which is continuous from the communication hole of tge plug are respectively disposed on the valve body and the plug. The communication hole and the outlet port of the valve boday are always in a communication state within the entire operation rotation stroke of the plug.

In order to reduce the rotational angle between full open and full close and maintain the section area of the passage, the communication hole of the plug and the inlet and outlet ports of the valve body communicated with the communication hole are partly disposed to have oval-like cross-sectional shapes. The corresponding semi-conical inlet and outlet adjusting chambers have semi-oval cross-sectional shape.

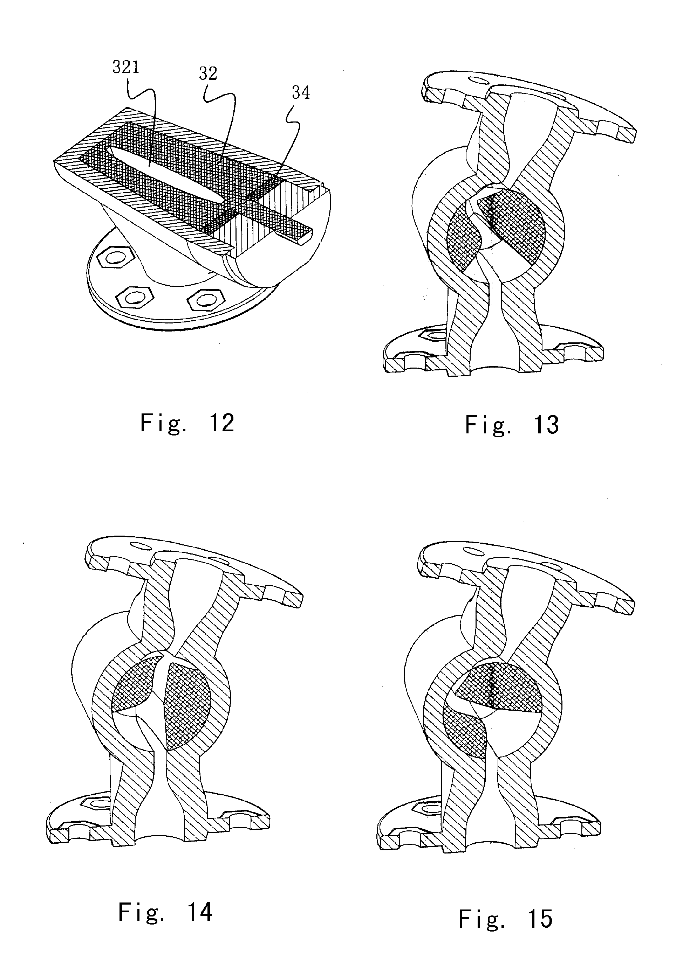

Figure 13, Figure 14 and Figure 15 show the relative positions of the inlet adjusting chamber and the outlet adjusting chamber when the throttle valve of the present embodiment is half-opened, full-opened and full-closed.

## Claims

1. A throttle valve comprising two sealing elements that carry out relative movement and whose contact surfaces keep in sealing and matching state, an inlet (111) and an outlet (121) of said valve being provided on said two sealing elements, respectively, **characterized in that** a semi-conical adjusting chamber (112, 122; 313, 322) is provided on each of the contact surfaces of said two sealing elements, the sharp ends of said adjusting chambers face to each other and are in communication with said inlet (111) and said outlet (121), respectively, when said contact surfaces of said two semi-conical adjusting chambers overlap at least partly, said two adjusting chambers constitute a passage communicating said inlet with said outlet.

2. The throttle valve according to claim 1, wherein said relative movement of said two sealing elements is a relative sliding movement.

3. The throttle valve according to claim 1, wherein said relative movement of said two sealing elements is a relative rotary movement.

4. The throttle valve according to any one of claims 1-3, wherein said semi-conical adjusting chamber (112, 122) changes its shape linearly from its thick end to its thin end.

5. The throttle valve according to any one of claims 1-3, wherein said semi-conical adjusting chamber (112, 122) changes its shape exponentially from its thick end to its thin end.

6. The throttle valve according to claim 3, wherein said two sealing elements are respectively a valve body (31) and a plug (32), wherein an inlet port (311), a valve chamber and an outlet port (312) are located on said valve body (31), a communication hole (321) is located on said plug, a semi-conical inlet adjusting chamber (313) which is in communication with said inlet port (311) of said valve body (31) and a semi-conical outlet adjusting chamber (322) which is continuous from said communication hole (321) of said plug (32) are respectively disposed on said valve body (31) and said plug (32), said communication hole (321) and said outlet port (312) of said valve boday (31) are always in a communication state within the entire operation rotation stroke of said plug (32).

7. The throttle valve according to claim 6, wherein said communication hole (321) of said plug (32) and said inlet and outlet ports (311, 312) of said valve body (31) communicated therewith are partly disposed to have oval-like cross-sectional shapes, said semi-conical inlet and outlet adjusting chambers (313, 322) have semi-oval cross-sectional shapes.
